# EUROPEAN PATENT SPECIFICATION

(11) **EP 3 878 691 B1**
(45) Date of publication and mention of the grant of the patent: **31.08.2022**
(21) Application number: 20382183.0
(22) Date of filing: 12.03.2020
(51) Int. Cl.: B60Q 3/20, F21K 9/61, F21S 41/24, F21S 43/235, F21S 43/237, F21S 43/247, F21V 8/00, F21W 106/00, G02B 6/42, B60Q 3/64

(54) **VEHICLE INTERIOR LIGHTING DEVICE WITH A LED MODULE AND A LIGHT GUIDE**
INNENRAUMBELEUCHTUNG FÜR FAHRZEUGE MIT EINEM LED MODUL UND EINEM LICHTLEITER
ÉCLAIRAGE INTÉRIEUR POUR VÉHICULES AVEC UN MODULE LED ET UN GUIDE D'ÉCLAIRAGE

(43) Date of publication of application: 15.09.2021
(73) Proprietor: Grupo Antolin-Ingenieria, S.A., 09007 Burgos (ES)
(72) Inventor: GÖRTLER, Erwin, 38554 Weyhausen (DE); GÜLLMEISTER, Henning, 38554 Weyhausen (DE)
(74) Representative: Capitán García, Maria Nuria

(56) References cited:
- WO-A1-2017/168061
- JP-A- 2017 134 895
- US-A1- 2004 052 089
- US-A1- 2015 146 433
- US-A1- 2017 261 168

## Description

### FIELD OF THE INVENTION

The present invention relates to a vehicle interior lighting device with a LED module and a light guide having a particular coupling between them.

### BACKGROUND OF THE INVENTION

Light guides are widely used in vehicle interior lighting applications, as transmitting and distributing devices of light from a light source, which inject light to one edge of a light guide and extract light from extracting means arranged over a light extracting surface. Light guides are transparent optical components comprising a body usually made of plastic material.

WO 2017168061 A1 discloses a vehicle interior lighting device with LED module comprising a housing which holds a PCB with a LED, and a tubular coupling portion for a light guide end, and a light guide coupled to said tubular coupling portion; regarding the LED, such housing keeps a distance and angular position (about 90 degrees) between the LED and an edge of the light guide, for an optical coupling and attaching between them.

The disclosure in WO 2017168061 A1 shows a light leakage in the LED module and particularly around the attaching means to the light guide being in the tubular coupling portion.

US 2015146433 A1 discloses a vehicle interior lighting device with a LED module comprising a housing which holds a PCB with a LED, and a tubular coupling portion for a light guide end, and a light guide coupled to said tubular coupling portion. The device is manufactured by plastic injection from an uncomplex tooling with a simple slider configuration. Such an uncomplex tooling comes from the fact that the demolding direction of the device follows the longitudinal axis of the tubular coupling portion. In a typical perpendicular demolding direction to such axis, the device would be very complicated.

In view of the disadvantages mentioned above, the object of the invention is a vehicle interior lighting device with a LED module housing a LED and a PCB and comprising a tubular coupling portion for a light guide end, and a light guide, wherein the tubular coupling portion comprises a housing wall with no leakage of light and preferably manufactured by plastic injection from an uncomplex tooling, the demolding axis following a transversal direction to such of the tubular coupling portion longitudinal axis.

### DESCRIPTION OF THE INVENTION

The present invention is established and characterised by the independent claim, while the dependent claims describe additional features thereof.

LED is used hereon for Light Emitting Diode and PCB for Printed Circuit Board.

The tubular coupling portion for the light guide usually presents a circular transversal section, as being a cylindrical configuration, especially when also usually light guides are cylindrical elements. However, such cylindrical shape is not an exclusive one and other tubular configurations are possible.

On the one hand, the light guide retention means allow ensuring the relative position between the LED and the light guide end in such a way that both parts are aligned according to the light beam axis of the LED.

On the other hand, said light guide retention means allow ensuring the retention of the light guide in the assembly direction, in such a way that they avoid, in use, the extraction of the light guide from the tubular coupling portion.

The mentioned light guide retention means collaborate with the light guide counter-retention means. The mutual cooperation between them creates the retention of the light guide.

The light guide housing wall fully closed provides the avoidance of leakage of direct light through the tubular coupling portion. Besides, further elements such as caps, are also no necessary to provide such avoidance of leakage, keeping the device without the inclusion of other elements, in its simplest configuration.

On the one hand, the thinner wall is thick enough to firstly avoid the leakage of direct light, and secondly to allow ensuring the retention forces of the light guide retention means when both parts are assembled.

On the other hand, the thinner wall is thin enough to obtain a low insertion force during the assembly process of the light guide end inside the LED module due to the thickness of said thinner wall allows the radially movement of the light guide retention means in such a way that a correct assembly between both parts is ensured.

Thus, the definition of the light guide retention means being radially floating provides an easy mounting by insertion of the light guide, and a robust final attaching, and at the same time avoids leakages due to direct light.

This radially floating means can move outward and inward following a radial direction of the tubular coupling portion, and fully floating or with a connecting rib, as explained here below, include a degree of movement in the radial direction that appears to be floating in the light guide housing wall.

According to the optional feature of fully floating configuration of the radially floating light guide retention means provides the advantage of a moveable light guide retention means as being only linked to the light guide housing wall by the thinner wall. A more restrictive configuration, but also more robust, is achieved when a reinforcing connecting rib is placed between such retention means and the housing wall of the tubular coupling portion in a direction parallel to the longitudinal axis of the tubular coupling portion and on a side of the thinner wall portion near a light guide opening or opposite the light guide opening.

An optional feature is that the light guide counter-retention means of the light guide comprise a first projection and the light guide retention means comprises a second projection, contacting one against the other; alternatively, the light guide comprises a first groove and the light guide retention means comprises a first projection, the first projection snaps into such first groove, and reversely the light guide comprises a second projection and the light guide retention means comprises a second groove, the second projection snaps into such second groove. These coupling options are suitable depending on the application to be used.

Another optional feature is that the light guide retention means are twin radially faced retention means, which allows a balanced and robust fixing providing a diametrically opposed anchoring of the light guide.

Another optional feature is that the light guide counter-angular position fixing means collaborate with the light guide angular position fixing means for providing an angular retention, ensuring a position of the light guide that provides a light extraction according to the area pretended in the specific application. Specifically, the light guide angular position fixing means are a third groove, which allows an easy coupling by direct sliding of the light guide into the tubular coupling portion.

Another optional feature is that the LED module housing is formed by two half parts divided by a dividing plane which contains the longitudinal axis of the tubular coupling portion in such a way that closed shapes in the LED module are avoided, mainly the shapes resulting in the light guide retention means.

This means according to a case in which the LED module is obtainable by plastic injection molding, that the demolding direction can be defined perpendicular to the dividing plane in such a way that, such light guide retention means are demolded directly avoiding the use of sliders, which makes the LED module housing tooling simple and less expensive.

### DESCRIPTION OF THE FIGURES

The present specification is completed by a set of figures that illustrate a preferred embodiment and in no way limit the invention.
Figure 1 shows a perspective and exploded view of a vehicle interior lighting device, with light guide retention means with a superior connecting rib.
Figures 2 to 5 show different options of the light guide retention means: fully floating, with an inferior connecting rib, with a horizontal connecting rib, and with several radial connecting ribs, respectively.
Figure 6 is a partial sectional view showing the light guide counter-retention means and the light guide retention means as first and second projections respectively.
Figure 7 discloses the embodiment of figure 6 showing the movement of the light guide retention means and deformation of the thinner wall portion when inserting the light guide into the tubular coupling portion of the LED module.
Figure 8 is a partial sectional view with the light guide counter-retention means and the light guide retention means of figure 6, and the fully floating retention means of figure 2.
Figure 9 is a partial sectional view showing the light guide counter-retention means as a first groove and the light guide retention means as a first projection.
Figure 10 is a partial sectional view showing the light guide counter-retention means as a second projection and the light guide retention means as a second groove.
Figure 11 is a partial sectional view showing the light guide angular position fixing means as a third groove.

### DETAILED DESCRIPTION OF THE INVENTION

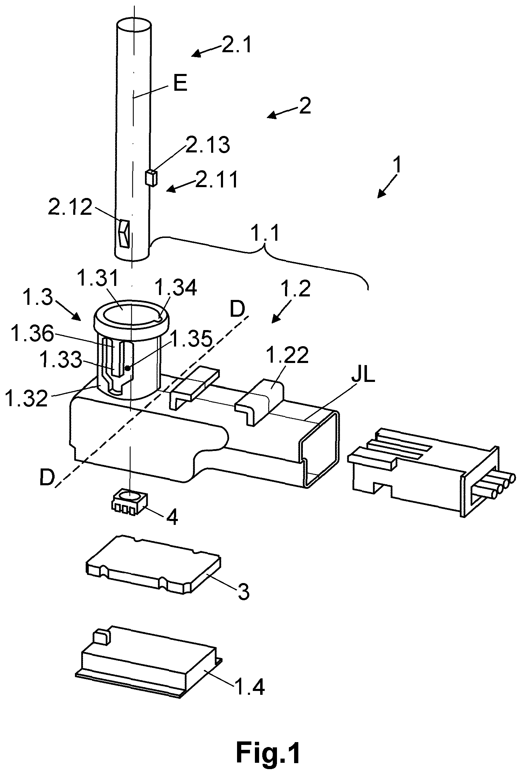

Figure 1 discloses an exploded view of a vehicle interior lighting device with a LED module (1) and a light guide (2). Figure 1 discloses the light guide (2) comprising:
- a light guide main body (2.1), shown rectilinear although curved is also possible;
- a light guide coupling end (2.11) having a longitudinal axis, comprising:
   - light guide counter-retention means (2.12) and,
   - light guide counter-angular position fixing means (2.13);
the LED module (1) comprising:
- a PCB (3) with a LED (4), the LED (4) mounted on one face of such PCB (3) and the LED (4) having a light beam axis;
- a LED module housing (1.1) comprising:
   - a body (1.2), as a hollow casing, housing the PCB (3), comprising PCB attaching means (1.21) in the interior of the LED module (1) for attaching the PCB (3), such PCB attaching means (1.21) take part of a tap (1.4) as explained here below in this document,
   - a tubular coupling portion (1.3) for optically coupling the light guide coupling end (2.11), and the LED (4), and for attaching the light guide coupling end (2.11) to the tubular coupling portion (1.3), wherein said tubular coupling portion (1.3) protrudes from the body (1.2), and having a longitudinal axis, comprising a light guide housing wall (1.32) surrounding a portion of the light guide (2), comprising:
      - light guide retention means (1.33), in figure 1 in the optional form of a reinforcing connecting rib (1.36) between such retention means (1.33) and the housing wall (1.32) of the tubular coupling portion (1.3) in a direction parallel to the longitudinal axis of the tubular coupling portion (1.3) and on a side of the thinner wall portion (1.35) near a light guide opening (1.31), which could be described easier as a superior connecting rib;
      - light guide angular position fixing means (1.34);
wherein the PCB attaching means (1.21) and the light guide housing wall (1.32) are arranged for providing a 90° degrees coupling between the PCB (3) and the longitudinal axis of the light guide coupling end (2.11) and an alignment between the longitudinal axis of the tubular coupling portion (1.3) and the light beam axis of the LED (4).

In figures, the axis E is noted. The LED module (1) and the light guide (2) are configured to be mounted in an assembly direction (E), which is coincident with the longitudinal axis of the light guide coupling end (2.11) and the longitudinal axis of the tubular coupling portion (1.3); the light guide counter-retention means (2.12) collaborate with the light guide retention means (1.33) for providing an outwards retention in the assembly direction (E).

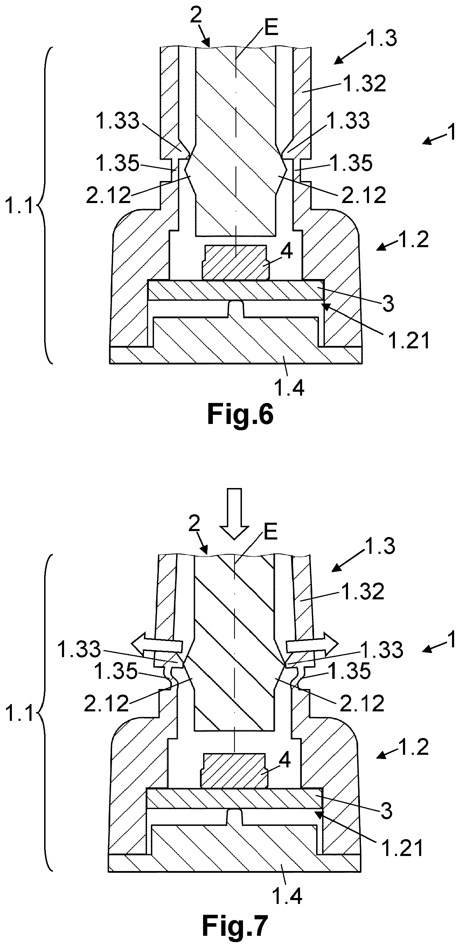

The light guide housing wall (1.32) is radially fully closed, includes a wall portion (1.35) surrounding the light guide retention means (1.33) and such wall portion (1.35) is thinner than the light guide housing wall (1.32) providing the light guide retention means (1.33) are radially floating, as shown in figures 1 to 10, in such a way the light guide retention means (1.33) can move outward and inward following a radial direction of the light guide housing wall (1.32), better shown in figure 7 where the wall portion (1.35) is deformed, moved outward, indicated by two lateral arrows in figure 7 for the movement of the light guide retention means (1.33), when introducing the light guide (2), vertical arrow in figure, into the tubular coupling portion (1.3) of the LED module (1).

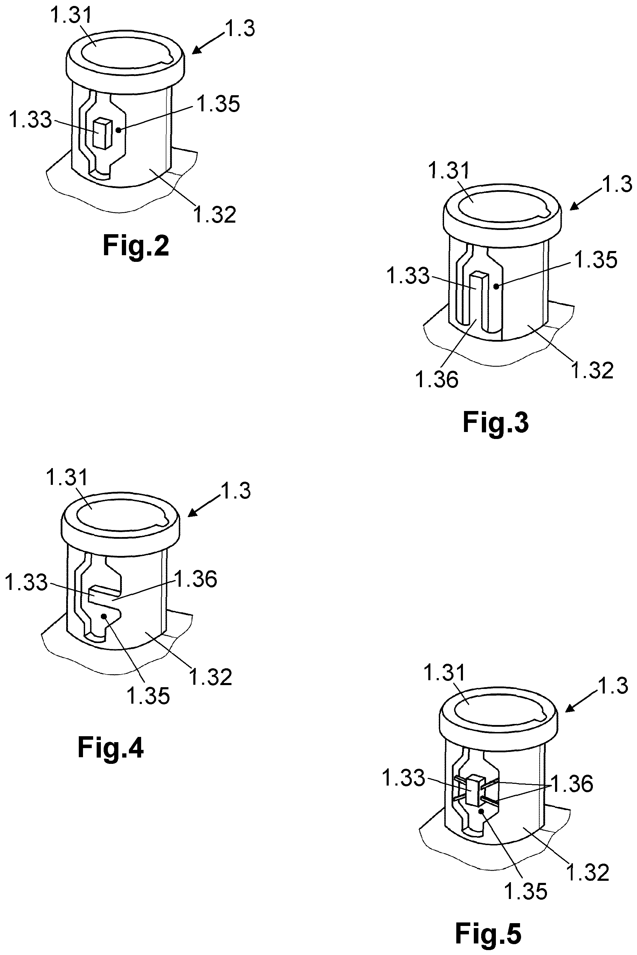

Optionally, shown in figure 2, the radially floating light guide retention means (1.33) are fully floating retention means.

Alternatively, the radially floating light guide retention means (1.33) includes a reinforcing connecting rib (1.36), between such retention means (1.33) and the housing wall (1.32) of the tubular coupling portion (1.3) in a direction parallel to the longitudinal axis of the tubular coupling portion (1.3) and on a side of the thinner wall portion (1.35) opposite the light guide opening (1.31), shown in figure 3, which could be described easier as an inferior connecting rib.

Any other configuration of the light guide retention means (1.33) that provides the floating effect is possible, as the options disclosed in figures 4 and 5 for a horizontal connecting rib (1.36), and several radial connecting ribs (1.36), respectively.

An optional detail shown in figures 1 and 6 is that the light guide counter-retention means (2.12) of the light guide (2) are a first projection and the light guide retention means (1.33) are a second projection; when the light guide (2) is coupled to the tubular coupling portion (1.3) the first projection snaps against, contacts to retain, the second projection.

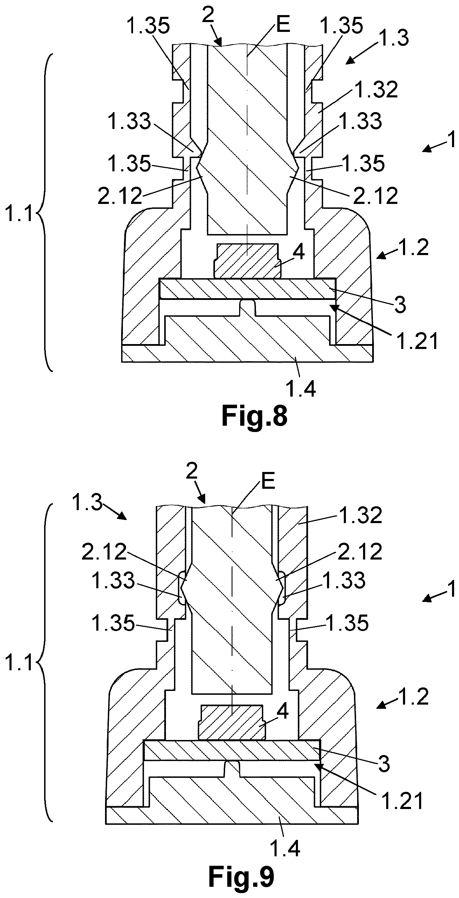

An optional detail shown in figure 9 is that the light guide counter-retention means (2.12) of the light guide (2) are a first groove and the light guide retention means (1.33) are a first projection; when the light guide (2) is coupled to the tubular coupling portion (1.3) the first projection snaps into such first groove.

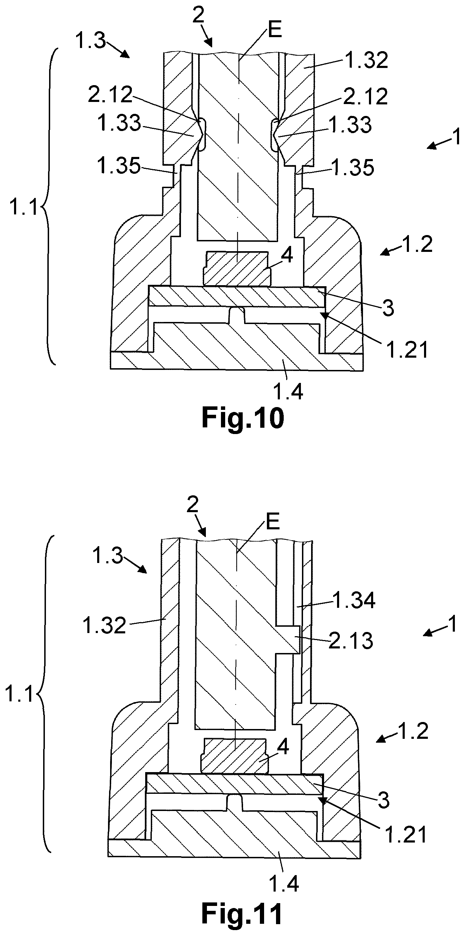

Inversely, as shown in figure 10, the light guide counter-retention means (2.12) of the light guide (2) are a second projection and the light guide retention means (1.33) are a second groove; when the light guide (2) is coupled to the tubular coupling portion (1.3) the second projection snaps into such second groove.

Advantageously, the option shown in figures is that the light guide retention means (1.33) are twin radially faced retention means.

Also, as shown in figure 11, the light guide counter-angular position fixing means (2.13) collaborate with the light guide angular position fixing means (1.34) for providing an angular retention, specifically the light guide angular position fixing means are a third groove.

As mentioned above, the PCB attaching means (1.21) take part of a tap (1.4) in the embodiments disclosed. In detail, such PCB attaching means (1.21) are composed of both a superior wall retention of the body (1.2) and an inferior pin retention of the tap (1.4). Such a configuration is a mere example and any other are possible, as a retaining rail in the body (1.2), etc.

Preferably, the LED module (1) is formed by two half parts divided by a dividing plane which contains the longitudinal axis of the tubular coupling portion (1.3) in such a way that closed shapes in the LED module (1) are avoided, said two half parts mountable in a mounting direction (D) perpendicular to the assembly direction (E), as shown in figure 1.

For instance, when the LED module (1) is obtained by plastic injection molding, divided into the two half parts, which joining line is referred as JL in figure 1, the light guide retention means (1.33) are oriented parallel, for example, to assembly direction (E) and with the ability to move along the mounting direction (D), which is also the demolding direction, perpendicular to the dividing plane. Such mounting, demolding, direction (D) makes the injection tooling uncomplex, simple and less expensive, avoiding the use of sliders, especially when including other configurations very useful for additional coupling, as a U configuration (1.22), figure 1.

## Claims

1. Vehicle interior lighting device comprising a LED module (1) and a light guide (2), the light guide (2) comprising:
- a light guide main body (2.1),
- a light guide coupling end (2.11) having a longitudinal axis, comprising:
- light guide counter-retention means (2.12) and,
- light guide counter-angular position fixing means (2.13);
the LED module (1) comprising:
- a PCB (3) with a LED (4), the LED (4) mounted on one face of such PCB (3) and the LED (4) having a light beam axis;
- a LED module housing (1.1) comprising:
- a body (1.2), housing the PCB (3), comprising PCB attaching means (1.21) in the interior of the LED module (1) for attaching the PCB (3);
- a tubular coupling portion (1.3) for optically coupling the light guide coupling end (2.11) and the LED (4), and for attaching the light guide coupling end (2.11) to the tubular coupling portion (1.3), wherein said tubular coupling portion (1.3) protrudes from the body (1.2), and having a longitudinal axis, comprising a light guide housing wall (1.32) surrounding a portion of the light guide (2), comprising:
- light guide retention means (1.33),
- light guide angular position fixing means (1.34);
wherein the PCB attaching means (1.21) and the light guide housing wall (1.32) are arranged for providing a 90° degrees coupling between the PCB (3) and the longitudinal axis of the light guide coupling end (2.11) and an alignment between the longitudinal axis of the tubular coupling portion (1.3) and the light beam axis of the LED (4);
wherein the LED module (1) and the light guide (2) are configured to be mounted in an assembly direction (E), which is coincident with the longitudinal axis of the light guide coupling end (2.11) and the longitudinal axis of the tubular coupling portion (1.3);
the light guide counter-retention means (2.12) collaborate with the light guide retention means (1.33) for providing an outwards retention in the assembly direction (E);
**characterized in that** the light guide housing wall (1.32) is radially fully closed, includes a wall portion (1.35) surrounding the light guide retention means (1.33) and such wall portion (1.35) is thinner than the light guide housing wall (1.32) providing the light guide retention means (1.33) are radially floating, in such a way the light guide retention means (1.33) can move outward and inward following a radial direction of the light guide housing wall (1.32).

2. Vehicle interior lighting according to claim 1, wherein the radially floating light guide retention means (1.33) are fully floating retention means.

3. Vehicle interior lighting according to claim 1, wherein the radially floating light guide retention means (1.33) includes a reinforcing connecting rib (1.36) between such retention means (1.33) and the housing wall (1.32) of the tubular coupling portion (1.3) in a direction parallel to the longitudinal axis of the tubular coupling portion (1.3) and on a side of the thinner wall portion (1.35) near a light guide opening (1.31).

4. Vehicle interior lighting according to claim 1, wherein the radially floating light guide retention means (1.33) includes a reinforcing connecting rib (1.36), between such retention means (1.33) and the housing wall (1.32) of the tubular coupling portion (1.3) in a direction parallel to the longitudinal axis of the tubular coupling portion (1.3) and on a side of the thinner wall portion (1.35) opposite a light guide opening (1.31).

5. -Vehicle interior lighting according to claim 1, wherein the light guide counter-retention means (2.12) of the light guide (2) are a first projection and the light guide retention means (1.33) are a second projection; when the light guide (2) is coupled to the tubular coupling portion (1.3) the first projection snaps against the second projection.

6. Vehicle interior lighting according to claim 1, wherein the light guide counter-retention means (2.12) of the light guide (2) are a first groove and the light guide retention means (1.33) are a first projection; when the light guide (2) is coupled to the tubular coupling portion (1.3) the first projection snaps into such first groove.

7. Vehicle interior lighting according to claim 1, wherein the light guide counter-retention means (2.12) of the light guide (2) are a second projection and the light guide retention means (1.33) are a second groove; when the light guide (2) is coupled to the tubular coupling portion (1.3) the second projection snaps into such second groove.

8. -Vehicle interior lighting according to any of the preceding claims, wherein the light guide retention means (1.33) are twin radially faced retention means.

9. -Vehicle interior lighting according to claim 1, wherein the light guide counter-angular position fixing means (2.13) collaborate with the light guide angular position fixing means (1.34) for providing an angular retention.

10. -Vehicle interior lighting according to claim 9, wherein the light guide angular position fixing means (1.34) are a third groove.

11. -Vehicle interior lighting according to any of the preceding claims, wherein the LED module housing (1.1) is formed by two half parts divided by a dividing plane which contains the longitudinal axis of the tubular coupling portion (1.3) in such a way that closed shapes in the LED module (1) are avoided, said two half parts mountable in a mounting direction (D) perpendicular to the assembly direction (E).

## Patentansprüche

1. Innenraumbeleuchtungsvorrichtung für Fahrzeuge, umfassend ein LED-Modul (1) und einen Lichtleiter (2), wobei der Lichtleiter (2) umfasst:
- einen Lichtleiterhauptkörper (2.1),
- ein Lichtleiterkopplungsende (2.11), das eine Längsachse aufweist, umfassend:
- Lichtleiter-Gegenhaltemittel (2.12) und
- Lichtleiter-Gegenwinkelpositionsfixiermittel (2.13) ;
wobei das LED-Modul (1) umfasst:
- eine Leiterplatte (3) mit einer LED (4), wobei die LED (4) auf einer Seite dieser Leiterplatte (3) montiert ist und die LED (4) eine Lichtstrahlachse aufweist;
- ein LED-Modulgehäuse (1.1), umfassend:
- einen Körper (1.2), der die Leiterplatte (3) aufnimmt und Leiterplatten-Befestigungsmittel (1.21) im Inneren des LED-Moduls (1) zum Befestigen der Leiterplatte (3) umfasst;
- einen rohrförmigen Kopplungsabschnitt (1.3) zum optischen Koppeln des Lichtleiterkopplungsendes (2.11) und der LED (4) und zum Befestigen des Lichtleiterkopplungsendes (2.11) an dem rohrförmigen Kopplungsabschnitt (1.3), wobei der rohrförmige Kopplungsabschnitt (1.3) von dem Körper (1.2) hervorsteht und eine Längsachse aufweist, umfassend eine Lichtleitergehäusewand (1.32), die einen Abschnitt des Lichtleiters (2) umgibt, umfassend:
- Lichtleiterhaltemittel (1.33),
- Lichtleiter-Winkelpositionsfixiermittel (1.34);
wobei die Leiterplatten-Befestigungsmittel (1.21) und die Lichtleitergehäusewand (1.32) angeordnet sind, um eine 90-Grad-Kopplung zwischen der Leiterplatte (3) und der Längsachse des Lichtleiterkopplungsendes (2.11) und eine Ausrichtung zwischen der Längsachse des rohrförmigen Kopplungsabschnitts (1.3) und der Lichtstrahlachse der LED (4) bereitzustellen;
wobei das LED-Modul (1) und der Lichtleiter (2) dazu konfiguriert sind, in einer Anordnungsrichtung (E) montiert zu werden, die mit der Längsachse des Lichtleiterkopplungsendes (2.11) und der Längsachse des rohrförmigen Kopplungsabschnitts (1.3) zusammenfällt; die Lichtleiter-Gegenhaltemittel (2.12) wirken mit den Lichtleiterhaltemitteln (1.33) zusammen, um eine in Anordnungsrichtung (E) nach außen gerichtete Halterung bereitzustellen;
**dadurch gekennzeichnet, dass** die Lichtleitergehäusewand (1.32) radial vollständig geschlossen ist, einen Wandabschnitt (1.35) einschließt, der die Lichtleiterhaltemittel (1.33) umgibt, und dieser Wandabschnitt (1.35) dünner als die Lichtleitergehäusewand (1.32) ist, sofern die Lichtleiterhaltemittel (1.33) radial schwebend sind, derart, dass sich die Lichtleiterhaltemittel (1.33) einer radialen Richtung der Lichtleitergehäusewand (1.32) folgend nach außen und innen bewegen können.

2. Innenraumbeleuchtung für Fahrzeuge nach Anspruch 1, wobei die radial schwebenden Lichtleiterhaltemittel (1.33) vollständig schwebende Haltemittel sind.

3. Innenraumbeleuchtung für Fahrzeuge nach Anspruch 1, wobei das radial schwebende Lichtleiterhaltemittel (1.33) eine verstärkende Verbindungsrippe (1.36) zwischen diesem Haltemittel (1.33) und der Gehäusewand (1.32) des rohrförmigen Kopplungsabschnitts (1.3) in einer Richtung parallel zur Längsachse des rohrförmigen Kopplungsabschnitts (1.3) und auf einer Seite des dünneren Wandabschnitts (1.35) nahe einer Lichtleiteröffnung (1.31) einschließt.

4. Innenraumbeleuchtung für Fahrzeuge nach Anspruch 1, wobei das radial schwebende Lichtleiterhaltemittel (1.33) eine verstärkende Verbindungsrippe (1.36) zwischen diesem Haltemittel (1.33) und der Gehäusewand (1.32) des rohrförmigen Kopplungsabschnitts (1.3) in einer Richtung parallel zur Längsachse des rohrförmigen Kopplungsabschnitts (1.3) und auf einer Seite des dünneren Wandabschnitts (1.35) gegenüber einer Lichtleiteröffnung (1.31) einschließt.

5. Innenraumbeleuchtung für Fahrzeuge nach Anspruch 1, wobei die Lichtleiter-Gegenhaltemittel (2.12) des Lichtleiters (2) ein erster Vorsprung sind und die Lichtleiterhaltemittel (1.33) ein zweiter Vorsprung sind; wenn der Lichtleiter (2) mit dem rohrförmigen Kopplungsabschnitt (1.3) gekoppelt ist, schnappt der erste Vorsprung gegen den zweiten Vorsprung.

6. Innenraumbeleuchtung für Fahrzeuge nach Anspruch 1, wobei die Lichtleiter-Gegenhaltemittel (2.12) des Lichtleiters (2) eine erste Nut sind und die Lichtleiterhaltemittel (1.33) ein erster Vorsprung sind; wenn der Lichtleiter (2) mit dem rohrförmigen Kopplungsabschnitt (1.3) gekoppelt ist, schnappt der erste Vorsprung in diese erste Nut ein.

7. Innenraumbeleuchtung für Fahrzeuge nach Anspruch 1, wobei die Lichtleiter-Gegenhaltemittel (2.12) des Lichtleiters (2) ein zweiter Vorsprung sind und die Lichtleiterhaltemittel (1.33) eine zweite Nut sind; wenn der Lichtleiter (2) mit dem rohrförmigen Kopplungsabschnitt (1.3) gekoppelt ist, schnappt der zweite Vorsprung in diese zweite Nut ein.

8. Innenraumbeleuchtung für Fahrzeuge nach einem der vorhergehenden Ansprüche, wobei die LichtleiterHaltemittel (1.33) zwei radial gegenüberliegende Haltemittel sind.

9. Innenraumbeleuchtung für Fahrzeuge nach Anspruch 1, wobei das Lichtleiter-Gegenwinkelpositionsfixiermittel (2.13) mit dem Lichtleiter-Winkelpositionsfixiermittel (1.34) zusammenwirkt, um eine Winkelrückhaltung bereitzustellen.

10. Innenraumbeleuchtung für Fahrzeuge nach Anspruch 9, wobei die Lichtleiter-Winkelpositionsfixiermittel (1.34) eine dritte Nut sind.

11. Innenraumbeleuchtung für Fahrzeuge nach einem der vorhergehenden Ansprüche, wobei das LED-Modulgehäuse (1.1) durch zwei Halbteile gebildet ist, die durch eine Teilungsebene geteilt sind, die die Längsachse des rohrförmigen Kopplungsabschnitts (1.3) enthält, so dass geschlossene Formen im LED-Modul (1) vermieden werden, wobei die beiden Halbteile in einer Montagerichtung (D) senkrecht zur Anordnungsrichtung (E) montierbar sind.

## Revendications

1. Dispositif d'éclairage intérieur pour véhicules comprenant un module LED (1) et un guide d'éclairage (2), le guide d'éclairage (2) comprenant :
- un corps principal de guide d'éclairage (2.1),
- une extrémité de couplage de guide d'éclairage (2.11) ayant un axe longitudinal, comprenant :
- des moyens de contre-retenue de guide d'éclairage (2.12) et,
- des moyens de fixation de position contre-angulaire de guide d'éclairage (2.13) ;
le module LED (1) comprenant :
- une PCB (3) avec une LED (4), la LED (4) montée sur une face de cette PCB (3) et la LED (4) ayant un axe de faisceau lumineux ;
- un boîtier de module LED (1.1) comprenant :
- un corps (1.2), accueillant la PCB (3), comprenant des moyens de fixation de PCB (1.21) à l'intérieur du module LED (1) pour fixer la PCB (3) ;
- une partie de couplage tubulaire (1.3) pour coupler optiquement l'extrémité de couplage de guide d'éclairage (2.11) et la LED (4), et pour fixer l'extrémité de couplage de guide d'éclairage (2.11) à la partie de couplage tubulaire (1.3), dans lequel ladite partie de couplage tubulaire (1.3) fait saillie du corps (1.2), et ayant un axe longitudinal, comprenant une paroi de boîtier de guide d'éclairage (1.32) entourant une partie du guide d'éclairage (2), comprenant :
- des moyens de retenue de guide d'éclairage (1.33),
- des moyens de fixation de position angulaire de guide d'éclairage (1.34) ;
dans lequel les moyens de fixation de PCB (1.21) et la paroi de boîtier de guide d'éclairage (1.32) sont agencés pour fournir un couplage à 90° entre la PCB (3) et l'axe longitudinal de l'extrémité de couplage de guide d'éclairage (2.11) et un alignement entre l'axe longitudinal de la partie de couplage tubulaire (1.3) et l'axe de faisceau lumineux de la LED (4) ;
dans lequel le module LED (1) et le guide d'éclairage (2) sont configurés pour être montés dans une direction d'assemblage (E), qui coïncide avec l'axe longitudinal de l'extrémité de couplage de guide d'éclairage (2.11) et l'axe longitudinal de la partie de couplage tubulaire (1.3) ;
les moyens de contre-retenue de guide d'éclairage (2.12) coopèrent avec les moyens de retenue de guide d'éclairage (1.33) pour assurer une retenue vers l'extérieur dans la direction d'assemblage (E) ;
**caractérisé en ce que** la paroi de boîtier de guide d'éclairage (1.32) est entièrement fermée radialement, comprend une partie de paroi (1.35) entourant les moyens de retenue de guide d'éclairage (1.33) et cette partie de paroi (1.35) est plus mince que la paroi de boîtier de guide d'éclairage (1.32) à condition que les moyens de retenue de guide d'éclairage (1.33) flottent radialement, de telle manière que les moyens de retenue de guide d'éclairage (1.33) puissent se déplacer vers l'extérieur et vers l'intérieur suivant une direction radiale de la paroi de boîtier de guide d'éclairage (1.32).

2. Éclairage intérieur pour véhicules selon la revendication 1, dans lequel les moyens de retenue de guide d'éclairage (1.33) flottant radialement sont des moyens de retenue totalement flottants.

3. Éclairage intérieur pour véhicules selon la revendication 1, dans lequel les moyens de retenue de guide d'éclairage (1.33) flottant radialement comprennent une nervure de liaison de renforcement (1.36) entre ces moyens de retenue (1.33) et la paroi de boîtier (1.32) de la partie de couplage tubulaire (1.3) dans une direction parallèle à l'axe longitudinal de la partie de couplage tubulaire (1.3) et sur un côté de la partie de paroi plus mince (1.35) près d'une ouverture de guide d'éclairage (1.31).

4. Éclairage intérieur pour véhicules selon la revendication 1, dans lequel les moyens de retenue de guide d'éclairage (1.33) flottant radialement comprennent une nervure de liaison de renforcement (1.36), entre ces moyens de retenue (1.33) et la paroi de boîtier (1.32) de la partie de couplage tubulaire (1.3) dans une direction parallèle à l'axe longitudinal de la partie de couplage tubulaire (1.3) et sur un côté de la partie de paroi plus mince (1.35) opposé à une ouverture de guide d'éclairage (1.31).

5. Éclairage intérieur pour véhicules selon la revendication 1, dans lequel les moyens de contre-retenue de guide d'éclairage (2.12) du guide d'éclairage (2) sont une première saillie et les moyens de retenue de guide d'éclairage (1.33) sont une seconde saillie ; lorsque le guide d'éclairage (2) est couplé à la partie de couplage tubulaire (1.3) la première saillie s'enclenche contre la seconde saillie.

6. Éclairage intérieur pour véhicules selon la revendication 1, dans lequel les moyens de contre-retenue de guide d'éclairage (2.12) du guide d'éclairage (2) sont une première rainure et les moyens de retenue de guide d'éclairage (1.33) sont une première saillie ; lorsque le guide d'éclairage (2) est couplé à la partie de couplage tubulaire (1.3) la première saillie s'enclenche dans cette première rainure.

7. Éclairage intérieur pour véhicules selon la revendication 1, dans lequel les moyens de contre-retenue de guide d'éclairage (2.12) du guide d'éclairage (2) sont une seconde saillie et les moyens de retenue de guide d'éclairage (1.33) sont une deuxième rainure ; lorsque le guide d'éclairage (2) est couplé à la partie de couplage tubulaire (1.3) la seconde saillie s'enclenche dans cette deuxième rainure.

8. Éclairage intérieur pour véhicules selon l'une quelconque des revendications précédentes, dans lequel les moyens de retenue de guide d'éclairage (1.33) sont des moyens de retenue jumelés radialement face à face.

9. Éclairage intérieur pour véhicules selon la revendication 1, dans lequel les moyens de fixation de position angulaire de guide d'éclairage (2.13) coopèrent avec les moyens de fixation de position angulaire de guide d'éclairage (1.34) pour assurer une retenue angulaire.

10. Éclairage intérieur pour véhicules selon la revendication 9, dans lequel les moyens de fixation de position angulaire de guide d'éclairage (1.34) sont une troisième rainure.

11. Éclairage intérieur pour véhicules selon l'une quelconque des revendications précédentes, dans lequel le boîtier de module LED (1.1) est formé de deux demi-parties séparées par un plan de séparation qui contient l'axe longitudinal de la partie de couplage tubulaire (1.3) de telle manière que des formes fermées dans le module LED (1) sont évitées, lesdites deux demi-parties pouvant être montées dans une direction de montage (D) perpendiculaire à la direction d'assemblage (E).
